# EUROPEAN PATENT APPLICATION

(11) **EP 4 636 893 A1**
(43) Date of publication of application: **22.10.2025**
(21) Application number: 24845960.4
(22) Date of filing: 19.07.2024
(51) Int. Cl.: H01M 10/058, H01M 50/509, H01M 50/521, H01M 50/526, H01M 10/6554, H01M 10/613, H01M 50/204, H01M 50/296, H01M 50/247, H01M 50/249

(54) **CABLE-TYPE CELL ASSEMBLY, CABLE-TYPE BATTERY MODULE AND CABLE-TYPE BATTERY PACK**

(30) Priority: 21.07.2023 KR 20230095049
(71) Applicant: LG Energy Solution, Ltd., Seoul 07335 (KR)
(72) Inventor: AHN, Byung Sun, Daejeon 34122 (KR); KIM, Ji Hyun, Daejeon 34122 (KR)
(74) Representative: Hoffmann Eitle
(86) International application number: PCT/KR2024/010506
(87) International publication number: WO 2025/023658

(57) **Abstract**

With the development of wearable devices having the capability of morphological or mechanical deformation, there is a need for morphological flexibility and mechanical durability in a battery pack for the wearable devices. Accordingly, conventional pouch-type cells are connected to each other in series or in parallel to constitute a battery pack in order to match the capacity and voltage according to the specifications of a device to be driven. However, as the thickness and volume of the cell assembly increases, a problem of performance degradation due to flexibility and mechanical stress occurs. Disclosed are a cable-type cell assembly, a cable-type battery module, and a cable-type battery pack capable of fundamentally solving the above problem. It is possible to meet the capacity and voltage according to the specifications of electronic devices while maintaining mechanical durability.

## Description

### [Technical Field]

This application claims the benefit of priority to Korean Patent Application No. 2023-0095049 filed on July 21, 2023, the disclosure of which is incorporated herein by reference in its entirety.

The present invention relates to a cable-type cell assembly, a cable-type battery module, and a cable-type battery pack. Specifically, with the development of wearable devices having the capability of morphological or mechanical deformation, there is a need for morphological flexibility and mechanical durability in a battery pack for wearable devices. Accordingly, conventional pouch-type cells are connected to each other in series or parallel to constitute a battery pack in order to match the capacity and voltage according to the specifications of a device to be driven. However, as the thickness and volume of the cell assembly increases, a problem of performance degradation due to flexibility and mechanical stress occurs. The present invention relates to a cable-type cell assembly, a cable-type battery module, and a cable-type battery pack capable of fundamentally solving the above problem.

### [Background Art]

With rapid improvement in safety and capacity of a lithium secondary battery, which is capable of being charged and discharged, the types of devices that use the lithium secondary battery as an energy source have increased in number.

For example, the lithium secondary battery has been widely used as an energy source for wireless mobile devices, which are small multifunctional products, or wearable devices, which are worn on bodies, and has also been used as an energy source for electric vehicles and hybrid electric vehicles presented as alternatives to existing gasoline and diesel vehicles, which cause air pollution, or as a medium or large battery pack configured to be used in an energy storage system (ESS).

Depending on the shape of a battery case, the lithium secondary battery is classified as a cylindrical battery cell having an electrode assembly mounted in a cylindrical metal can, a prismatic battery cell having an electrode assembly mounted in a prismatic metal can, or a pouch-type battery cell having an electrode assembly mounted in a pouch-type case made of an aluminum laminate sheet. Thereamong, the pouch-type battery cell has the advantages of relatively large capacity and easy structural modification.

Various wearable computer technologies and applications using these secondary batteries as a power source are being developed and published, and electronic devices such as mobile phones and laptop computers are being designed so as to have a predetermined curved surface for ergonomic design. Accordingly, secondary batteries for operating these electronic devices also need to be formed so as to have various shapes, such as a predetermined curved surface, depending on the shape of the electronic devices.

In order to match the capacity and voltage to meet the specifications of these types of devices, a plurality of pouch-type cells may be connected to each other in parallel or series to constitute a pack. However, there is a problem that the thickness and volume of each of the pouch-type cells increase accordingly, which reduces the flexibility of the cells and directly applies mechanical stress to cell components in case of mechanical deformation, resulting in performance degradation due to damage to the pouch-type cells.

In response thereto, the concept of a linear cell, which is a cell having a very large ratio of the length to the sectional diameter, has been proposed, but no technological development has been confirmed for application to a cell assembly, a battery module, and a battery pack as a cell unit concept.

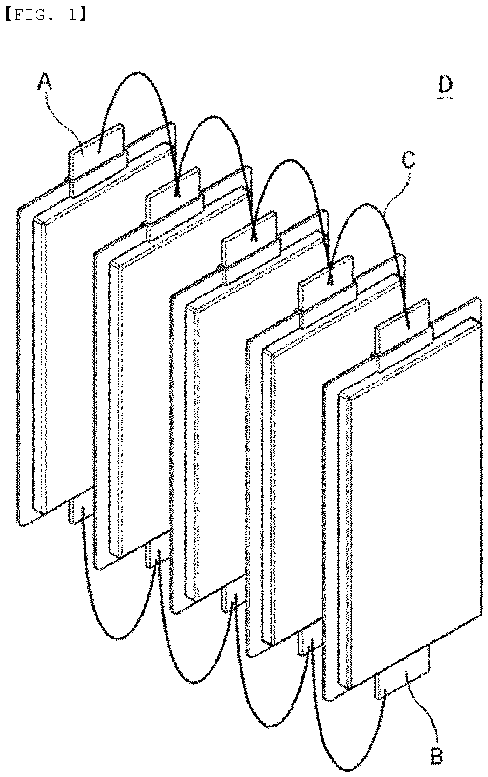

FIG. 1 is a schematic view of a cell assembly in which conventional pouch-type battery cells D are connected to each other by terminal connection.

FIG. 1 is a schematic view of a pouch-type cell assembly having a parallel connection structure achieved by connection between positive electrode leads A protruding in one direction via a terminal wire C and connection between negative electrode leads B protruding in the opposite direction via a terminal wire C.

Although it is relatively easy to connect a plurality of battery cells by stacking pouch-type cell assemblies, in the case of a cable-type cell of the present invention, technological development is required to constitute a cell assembly that reflects the shape, capacity, and voltage conditions of various electronic devices.

Korean Patent Application Publication No. 10-2005-99903 discloses a variable type cell including an inner electrode, an outer electrode, and an electrolyte layer interposed between the electrodes, but the variable type cell has poor flexibility. In addition, since the variable type cell uses a polymer electrolyte to form the electrolyte layer, it is difficult for an electrolyte to flow into an active material of the electrode, which increases the resistance of the cell, resulting in a decrease in capacity characteristics and cycle characteristics.

Furthermore, in the formation of a cable-type secondary battery, an uneven gap occurs between a separation layer interposed between an inner electrode and an outer electrode and the electrodes, and due to such a gap, the inflow of an electrolyte into an active material layer of the outer electrode may not occur smoothly, resulting in a deterioration of the battery performance.

Korean Patent Application Publication No. 10-2017-0093575 discloses a cable-type secondary battery including a cable-type electrode assembly including an inner electrode, a separation layer formed so as to enclose an outer surface of the inner electrode and configured to prevent short circuit of the electrode, and an outer electrode formed so as to enclose the separation layer, and a sheet type package spirally wound so as to enclose an outer surface of the cable-type electrode assembly, and a method of manufacturing the same.

However, there is a difference with technology of forming an outer member for connecting a plurality of cable-type cells of the present invention.

Korean Patent Application Publication No. 10-2016-0098095 discloses a cable-type secondary battery including an inner electrode support and a sheet type inner electrode-separation layer-outer electrode complex spirally wound outside the inner electrode support, wherein the inner electrode-separation layer-outer electrode complex is formed by pressing the inner electrode, the separation layer, which is configured to prevent short circuit between the electrodes, and the outer electrode so as to be integrated.

However, there is a difference from technology of forming a cable-type cell assembly using a sheathing member of the present invention.

Consequently, there is a need for the development of a cable-type cell assembly, a cable-type battery module, and a cable-type battery pack in which a plurality of battery cells is finally packaged using a cable-type cell capable of realizing high flexibility as a basic battery cell unit to realize the capacity and voltage required by electronic devices.

### [Disclosure]

### [Technical Problem]

The present invention has been made in view of the above problems, and it is an object of the present invention to provide a cable-type cell assembly, a cable-type battery module, and a cable-type battery pack in which a plurality of battery cells is finally packaged using a cable-type cell capable of realizing high flexibility as a basic battery cell unit to realize the capacity and voltage required by electronic devices.

It is another object of the present invention to provide a cable-type cell assembly, a cable-type battery module, and a cable-type battery pack that improves mechanical flexibility and durability when constituting not only a basic cell but also a battery pack as a power source for electronic devices requiring flexibility and mechanical durability.

### [Technical Solution]

A cable-type cell assembly according to the present invention to accomplish the above objects includes two or more cable-type cells, each of the two or more cable-type cells including: a cable-type electrode assembly having a structure that includes an inner electrode support, one or more inner electrodes spirally wound on the inner electrode support in sequence, an outer separation layer, and an outer electrode; a laminated embedded member configured to receive the cable-type electrode assembly; an electrode tab formed outside the laminated embedded member and configured for electrical connection of the cable-type electrode assembly; and a sheathing member formed outside the laminated embedded member, the sheathing member being configured to physically connect the two or more cable-type cells to each other.

In addition, the plurality of cable-type cells may be connected to each other in parallel and/or in series via the electrode tab.

In addition, the sheathing member may connect n cable-type cells (n being an integer greater than zero) to each other in one column.

In addition, the sheathing member may be in contact with the outside of the laminated embedded member.

In addition, the sheathing member may be made of any one selected from a group consisting of a polymer compound, a metal, and a ceramic or two or more thereof.

In addition, the polymer compound of the sheathing member may include any one selected from the group consisting of polyethylene terephthalate (PET), polyvinyl chloride (PVC), high density polyethylene (HDPE), and an epoxy resin or a mixture of two or more thereof.

In addition, the sheathing member may be made of a heat shrinkable polymer compound.

In addition, the heat shrinkable polymer compound may include any one selected from the group consisting of polyolefin, polyester, a fluoro-resin, and polyvinyl chloride or two or more thereof.

In addition, the metal may include any one of iron, carbon, chromium, manganese, stainless steel, aluminum, nickel, titanium, calcined carbon, and copper or an alloy of two or more thereof.

In addition, the ceramic may include any one of clay, kaolinite, aluminum oxide (Al₂O₃), silicon carbide (SiC), tungsten carbide, silicon, and carbon or a ceramic mixture of two or more thereof.

In addition, an adhesive layer that is configured for adhesion with an outer surface of the laminated embedded member may be further formed on an inner surface of the sheathing member.

In addition, the adhesive layer may be made of any one of polypropylene, polycarbonate, polyethylene, styrene butadiene rubber, sodium carboxymethylcellulose, polyvinylidene fluoride, polyvinylidene fluoride copolymer, polytetrafluoroethylene, polystyrene, polyacrylonitrile, polyimide, polyacrylic acid, sodium polyacrylate, polyvinyl alcohol, sodium alginate, poly(methacrylic acid), and carboxymethyl chitosan or two or more thereof.

In addition, the section of the cable-type cell may have any one of a circular shape, an oval shape, a triangular shape, a quadrangular shape, a square shape, a rectangular shape, a polygonal shape, and an amorphous shape.

The sectional shape of the cable-type cell assembly may be at least one of a horizontal straight shape, a vertical straight shape, a W shape, an S shape, a Z shape, a U shape, and an O shape.

In addition, the sheathing member may include a cell receiving portion configured to receive the cable-type cell and a cell connection portion configured to connect adjacent cell receiving portions to each other.

In addition, the cell connection portion may have a predetermined length in order to form a gap between adjacent cable-type cells.

In addition, a length of the cell connection portion may be 5% to 500% of the sectional length of the cable-type cell.

In addition, the cell receiving portion may be in the form of a tube that is open such that the section of each end of the cell receiving portion corresponds to a sectional shape of the cable-type cell received therein or in the form of a tube in which an opening is formed in the tube such that only the electrode tab protrudes outward.

In addition, the cell connection portion may be configured to connect facing sides of adjacent cell receiving portions to each other, and the thickness of the cell connection portion may be equal to or greater than the thickness of the cell receiving portion.

In addition, the laminated embedded member may be spirally wound or may be pocket-shaped to receive the cable-type electrode assembly.

In addition, the inner electrode may be a monocell type first inner electrode including a first inner current collector and a first inner active material layer formed on one surface of the first inner current collector.

In addition, the inner electrode may be a bi-cell type inner electrode including a first inner electrode, an inner separation layer spirally wound outside the first inner electrode and a second inner electrode spirally wound outside the inner separation layer.

In addition, the second inner electrode may include a second inner current collector and a 2-1 inner active material layer and a 2-2 inner active material layer formed respectively on opposite surfaces of the second inner current collector.

In addition, the first inner electrode, the inner separation layer, the second inner electrode, the outer separation layer, and the outer electrode may sequentially enclose an outer surface of the cable-type electrode assembly, and each of the first inner electrode, the inner separation layer, the second inner electrode, the outer separation layer, and the outer electrode may have a strip structure spirally wound and extending in one direction or have a metal wire structure spirally wound and having an outer surface coated with an active material layer.

In addition, the first inner electrode, the inner separation layer, the second inner electrode, the outer separation layer, and the outer electrode may be spirally wound so as not to overlap each other.

In addition, the first inner electrode, the inner separation layer, the second inner electrode, the outer separation layer, and the outer electrode may be spirally wound so as to be spaced apart from each other by a distance no more than twice the width of each thereof such that the first inner electrode, the inner separation layer, the second inner electrode, the outer separation layer, and the outer electrode do not overlap each other.

In addition, the first inner electrode, the inner separation layer, the second inner electrode, the outer separation layer, the outer electrode, and the embedded member may be spirally wound so as to overlap each other.

In addition, the first inner electrode, the inner separation layer, the second inner electrode, the outer separation layer, the outer electrode, and the embedded member may be spirally wound such that the width of an overlapping portion is within 0.9 times the width of each thereof.

In addition, the present invention provides a cable-type battery module including the cable-type cell assembly, wherein the cable-type battery module includes a module case configured to receive the cable-type cell assembly, the module case having a thermally conductive heat dissipation member provided therein.

In addition, the cable-type cell assembly may be received in a space partitioned by the heat dissipation member in one or more.

In addition, the cable-type battery module may include a terminal assembly configured for electrical connection between the cable-type cell assembly and an external terminal.

In addition, the terminal assembly may include a terminal assembly body fixedly coupled to the module case so as to be connected to an electrode tab of the cable-type cell assembly and an input and output terminal protruding from one side of the terminal assembly body so as to be electrically connected to the cable-type cell assembly.

In addition, the electrode tabs of the cable-type cell may be formed in one direction or both directions.

In addition, the cable-type cell assembly may be configured to be used in one or more of a smartphone, a VR device, an AR device, a wearable device, or other small devices.

In addition, the present invention provides a cable-type battery pack including at least one cable-type battery module, wherein the cable-type battery pack is configured to be used as a power source for medium to large devices.

In addition, each of the medium to large devices may be a power tool, an electric vehicle, including an electric vehicle (EV), a hybrid electric vehicle (HEV), and a plug-in hybrid electric vehicle (PHEV), an electric two-wheeled vehicle, including an E-bike and an E-scooter, an electric golf cart, an electric truck, an electric commercial vehicle, or an energy storage system.

In addition, the present invention may provide various combinations of the above solving means.

### [Advantageous Effects]

As is apparent from the above description, a cable-type cell assembly according to the present invention may be configured to meet the capacity and voltage according to the specifications of electronic devices while maintaining mechanical durability.

In addition, a cable-type battery module or a cable-type battery pack including the cable-type cell assembly may be configured to be used as a power source that can be applied to various forms such as wearable devices while securing flexibility and preventing mechanical stress.

Consequently, mechanical defects that may occur when manufacturing a pouch-type battery pack may be overcome by applying the cable-type battery module or the cable-type battery pack.

### [Description of Drawings]

FIG. 1 is a schematic view of a cell assembly in which conventional pouch-type battery cells are connected to each other by terminal connection.
FIG. 2 is a schematic view showing terminal connection of a cable-type cell assembly according to an embodiment of the present invention.
FIG. 3 is a sectional view of the cable-type cell assembly according to the embodiment of the present invention implemented as a curved cell assembly.
FIG. 4 is a perspective view of the cable-type cell assembly according to the embodiment of the present invention implemented as a curved cell assembly.
FIG. 5 is a schematic view showing parallel connection of a one-column cable-type cell assembly according to an embodiment of the present invention.
FIG. 6 is a schematic view showing series connection of the one-column cable-type cell assembly according to the embodiment of the present invention.
FIG. 7 is a schematic view showing series and parallel connection of the one-column cable-type cell assembly according to the embodiment of the present invention.
FIG. 8 is a schematic view of a cable-type battery module in which the one-column cable-type cell assembly according to the embodiment of the present invention is loaded.
FIG. 9 is a stress-strain graph of a conventional pouch-type cell assembly and the one-column cable-type cell assembly according to the embodiment of the present invention.
FIG. 10 is a graph showing resistance change (R/R₀) due to increase in bending cycle in the conventional pouch-type cell assembly and the one-column cable-type cell assembly according to the embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the drawings.

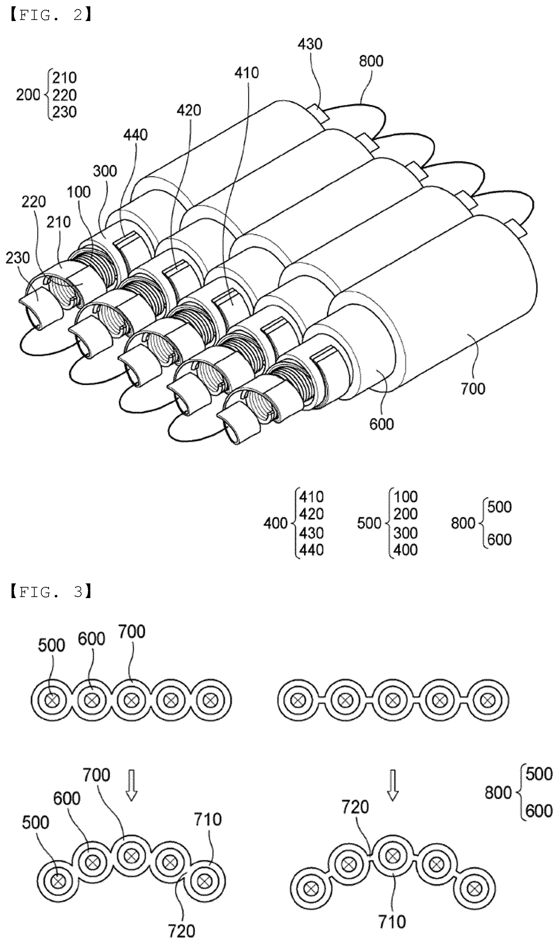

FIG. 2 is a schematic view showing terminal connection of a cable-type cell assembly according to an embodiment of the present invention.

Referring to FIG. 2, the cable-type cell assembly includes two or more cable-type cells 800, each of which includes a cable-type electrode assembly 500 including an inner electrode support 100, one or more inner electrodes 200 spirally wound on the inner electrode support 100 in sequence, an outer separation layer 300, and an outer electrode 400, a laminated embedded member 600 configured to receive the cable-type electrode assembly 500, and an electrode tab formed outside the embedded member 600 for electrical connection of the cable-type electrode assembly 500, and a sheathing member 700 formed outside the embedded member 600, the sheathing member being configured to physically connect the two or more cable-type cells 800 to each other. The electrode tab includes an inner electrode tab 230 and an outer electrode tab 430.

The term "spirally" refers to a shape that is twisted over a certain range, which is similar to the shape of a common spring, and the term "helically" may be used interchangeably therewith.

Each of the inner electrode 200, the outer separation layer 300, and the outer electrode 400 may have a strip structure extending in one direction.

A laminate sheet having a multilayered structure, of which a cell case of a conventional pouch-type cell is made, is cut in the form of a strip so as to be used as the laminated embedded member 600, and therefore a separate description of the material and structure of the laminated embedded member will be omitted.

The inner electrode support 100 may have an open structure having a space defined therein.

The inner electrode support 100 may be at least one spirally wound wire, at least one spirally wound sheet, a twisted wire, a linear wire, a hollow fiber, or a meshed support.

The hollow fiber may be made of at least one selected from the group consisting of polyethylene, polypropylene, polytetrafluoroethylene, polyvinylidene fluoride, polyacrylonitrile, polyimide, polyethylene terephthalate, polyamide imide, polyester imide, polyether sulfone, and polysulfone.

The inner electrode support 100 may include two or more wire type inner electrode supports spirally wound so as to intersect each other.

An inner electrode current collector core portion, a lithium ion supply core portion including an electrolyte, or a filling core portion may be formed in the space defined in the inner electrode support 100.

The inner electrode current collector core portion may be made of carbon nanotube, stainless steel, aluminum, nickel, titanium, calcined carbon, or copper; stainless steel surface-treated with carbon, nickel, titanium, or silver; an aluminum-cadmium alloy; a non-conductive polymer surface-treated with a conductive agent; or a conductive polymer.

The lithium ion supply core portion may include a gelled polymer electrolyte and a support.

The electrolyte may be a non-aqueous electrolyte using ethylene carbonate (EC), propylene carbonate (PC), butylene carbonate (BC), vinylene carbonate (VC), diethyl carbonate (DEC), dimethyl carbonate (DMC), ethyl methyl carbonate (EMC), methyl formate (MF), gamma-butyrolactone (γ-BL), sulfolane, methylacetate (MA), or methylpropionate (MP).

The electrolyte may include an electrolyte selected from among solid electrolytes using polyethylene oxide (PEO), polypropylene oxide (PPO), polyethylene imine (PEI), polyethylene sulfide (PES), or polyvinyl acetate (PVAc).

The electrolyte may further include a lithium salt.

The lithium salt may be any one selected from the group consisting of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, lithium chloroborane, low aliphatic lithium carbonate, and lithium tetraphenylborate or a mixture of two or more thereof.

Polyethylene oxide (PEO), polyvinylidene fluoride (PVdF), polyvinylidene fluoride-co-hexafluoropropylene (PVdF-HFP), polymethylmethacrylate (PMMA), polyacrylonitrile (PAN), or polyvinyl acetate (PVAc) may be used as the gelled polymer electrolyte.

The first inner electrode may include a first inner current collector 210 and a first inner active material layer 220 formed on one surface of the first inner current collector 210, and the outer electrode 400 may include an outer current collector 410 and an outer active material layer 420 formed on one surface of the outer current collector 410.

A polymer film layer formed on at least one of the other surface of the first inner current collector 210 and the other surface of the outer current collector 410 may be further included. As the result of adding the polymer film layer, the thickness of each of the first inner current collector 210 and the outer current collector 410, which are thin, may be increased to support the active material layer. In addition, since the polymer film layer, which is flexible, is added rather than increasing the thickness of each of the first inner current collector 210 and the outer current collector 410, the first inner current collector 210 and the outer current collector 410 may be easily deformed during a spiral winding process.

The polymer film layer may include any one selected from the group consisting of polyolefin, polyester, polyimide, and polyamide or two or more thereof.

A polymer support layer 440 may be further formed on the surface of at least one of the first inner active material layer 220 and the outer active material layer 420.

The polymer support layer 440 may be a porous polymer layer having a pore size of 0.01 µm to 10 µm and a porosity of 5% to 95%.

The polymer support layer 440 may include a polar linear polymer, an oxide-based linear polymer, or a mixture thereof.

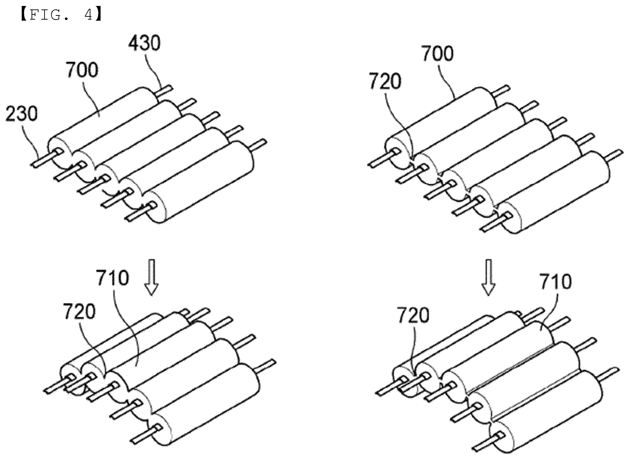

FIG. 3 is a sectional view of the cable-type cell assembly according to the embodiment of the present invention implemented as a curved cell assembly, and FIG. 4 is a perspective view of the cable-type cell assembly according to the embodiment of the present invention implemented as a curved cell assembly.

Referring to FIGs. 3 and 4, the plurality of cable-type electrode assemblies 500 may be connected to each other in parallel and/or series via the inner electrode tabs 230 and the outer electrode tabs 430.

The plurality of cable-type electrode assemblies 500 may be connected to each other in parallel and/or series via the inner electrode tabs 230 and the outer electrode tabs 430 in one direction or both directions of the cable-type cell.

The sheathing member 700 may connect n cable-type cells 800 (n being an integer greater than zero) to each other in one column.

The sheathing member 700 may connect n cable-type cells 800 (n being an integer greater than zero) to each other in one row.

The sheathing member 700 may connect n cable-type cells 800 (n being an integer greater than zero) to each other in two or more columns.

The sheathing member 700 may connect n cable-type cells 800 (n being an integer greater than zero) to each other in two or more rows.

The term "one column" or "two columns" means that cylindrical side surfaces of the cable-type cells are disposed side by side in one line or two lines in a horizontal direction so as to be adjacent to each other, and the term "one row" or "two rows" means that the cylindrical side surfaces of the cable-type cells are disposed side by side in one line or two lines in a vertical direction so as to be adjacent to each other.

Here, n is an integer greater than zero, and may be 10,000 or less, specifically 1,000 or less, and more specifically 100 or less.

The sheathing member 700 may be in contact with the outside of the embedded member 600.

The sheathing member 700 may be in partial contact with the outside of the embedded member 600.

The sheathing member 700 may be made of any one selected from the group consisting of a polymer compound, metal, and ceramic or two or more thereof.

The polymer compound of the sheathing member 700 may include any one selected from the group consisting of polyethylene terephthalate (PET), polyvinyl chloride (PVC), high density polyethylene (HDPE), and an epoxy resin or two or more thereof.

The sheathing member 700 may be made of a heat shrinkable polymer compound.

The heat shrinkable polymer compound may include any one selected from the group consisting of polyolefin, polyester, a fluoro-resin, and polyvinyl chloride or two or more thereof.

The metal may include any one of iron, carbon, chromium, manganese, stainless steel, aluminum, nickel, titanium, calcined carbon, and copper or an alloy of two or more thereof.

The ceramic may include any one of clay, kaolinite, aluminum oxide (Al₂O₃), silicon carbide (SiC), tungsten carbide, silicon, and carbon or a ceramic mixture of two or more thereof.

An adhesive layer for adhesion with an outer surface of the embedded member 600 may be further formed on an inner surface of the sheathing member 700.

The adhesive layer may be made of any one of polypropylene, polycarbonate, polyethylene, styrene butadiene rubber, sodium carboxymethylcellulose, polyvinylidene fluoride, polyvinylidene fluoride copolymer, polytetrafluoroethylene, polystyrene, polyacrylonitrile, polyimide, polyacrylic acid, sodium polyacrylate, polyvinyl alcohol, sodium alginate, poly(methacrylic acid), and carboxymethyl chitosan or two or more thereof.

The polymer material of the adhesive layer is not limited as long as the adhesive layer is capable of coupling the sheathing member and the embedded member to each other.

The adhesive layer may be replaced by a pressuresensitive adhesive.

The sheathing member 700 may include a cell receiving portion 710 configured to receive the cable-type cell and a cell connection portion 720 configured to connect adjacent cell receiving portions 710 to each other.

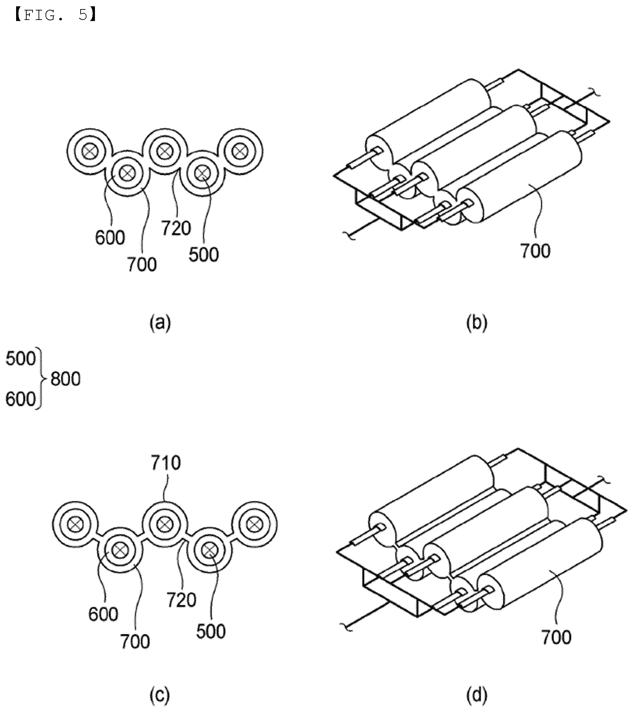

FIG. 5 is a schematic view showing parallel connection of a one-column cable-type cell assembly according to an embodiment of the present invention.

Referring to FIG. 5, FIG. 5 includes a front view (a) and a perspective view (b) of a cable-type cell assembly having short cell connection portions, and a front view (c) and a perspective view (d) of a cable-type cell assembly having long cell connection portions, respectively. The section of the cable-type cell 800 may have any one of a circular shape, an oval shape, a triangular shape, a quadrangular shape, a square shape, a rectangular shape, a polygonal shape, and an amorphous shape.

In order for the section of the cable-type cell to be configured so as to have angled corners, the diameter for winding is necessarily large.

The sectional shape of the cable-type cell assembly may be at least one of a horizontal straight shape, a vertical straight shape, a W shape, an S shape, a Z shape, a U shape, and an O shape.

The cable-type cell assembly may constitute a curved cell assembly.

The sheathing member 700 is a member for connection between the cable-type cells and may receive the embedded member 600.

The cell connection portion 720 may be configured to have a predetermined length in order to form a gap between adjacent cable-type cells 800.

The length of the cell connection portion 720 may be 5% to 500% of the sectional length of the cable-type cell 800.

The length of the cell connection portion 720 is not limited as long as the cell connection portion is capable of withstanding strain stress caused by deformation of the cable-type cell assembly.

The thickness of the cell connection portion 720 may be 100% to 400% of the thickness of the sheathing member 700. The thickness of the cell connection portion 720 is not limited as long as the cell connection portion is capable of withstanding stress caused by deformation of the cable-type cell assembly.

The cell receiving portion 710 may be in the form of a tube that is open such that the section of each end of the cell receiving portion corresponds to the sectional shape of the cable-type cell received therein or may be in the form of a tube in which an opening is formed in the tube such that only the electrode tab protrudes outward.

The cell connection portion 720 may be configured to connect facing sides of adjacent cell receiving portions 710 to each other, and the thickness of the cell connection portion 720 may be equal to or greater than the thickness of the cell receiving portion 710.

The laminated embedded member 600 may be spirally wound or is pocket-shaped to receive the cable-type electrode assembly.

The inner electrode includes a first inner electrode including a first inner current collector 210, a first inner active material layer 220 formed on at least one surface of the first inner current collector 210, and an inner electrode tab 230 and a second inner electrode including a second inner current collector, a second inner active material layer formed on at least one surface of the second inner current collector, and an inner electrode tab 430.

The inner electrode may be configured such that an inner separation layer is spirally wound outside the first inner electrode and the second inner electrode is spirally wound outside the inner separation layer.

When the inner electrode includes only a first inner electrode, the inner electrode may be configured such that an outer separation layer is spirally wound outside the first inner electrode and an outer electrode is spirally wound outside the outer separation layer, which is referred to as a monocell.

When the inner electrode includes a first inner electrode, an inner separation layer, and a second inner electrode, the inner electrode may be configured such that an outer separation layer is spirally wound outside the inner electrode and an outer electrode is spirally wound outside the outer separation layer, which is referred to as a bi-cell.

The first inner current collector and the second inner current collector must be isolated from each other by the inner separation layer, and the second inner current collector and the outer current collector must be isolated from each other by the outer separation layer, and therefore the width of each of the inner separation layer and outer separation layer, each of which is configured in the form of a strip, may be greater than the width of each of the first inner current collector, the second inner current collector, and the outer current collector, and the length of each of the inner separation layer and outer separation layer may be greater than the length of each of the first inner current collector, the second inner current collector, and the outer current collector.

At least one of the first inner current collector, the second inner current collector, and the outer current collector may further include a primer coating layer including a conductive agent and a binder.

The conductive agent may include any one selected from the group consisting of carbon black, acetylene black, Ketjen black, carbon fiber, carbon nanotube, and graphene or a mixture of two or more thereof.

The binder may be any one selected from the group consisting of polyvinylidene fluoride (PVDF), polyvinylidene fluoride-co-hexafluoro propylene, polyvinylidene fluoride-co-trichloroethylene, poly(butyl acrylate), polymethylmethacrylate, polyacrylonitrile, polyvinylpyrrolidone, polyvinylacetate, ethylene-co-vinyl acetate, polyethylene oxide, polyarylate, and cellulose acetate, cellulose acetate butyrate, cellulose acetate propionate, cyanoethyl pullulan, cyanoethyl polyvinylalcohol, cyanoethyl cellulose, cyanoethyl sucrose, pullulan, carboxyl methyl cellulose, styrene-butadiene rubber, acrylonitrile-styrene-butadiene copolymer, and polyimide or two or more thereof.

At least one of the first inner current collector, the second inner current collector, and the outer current collector may be made of stainless steel; aluminum; nickel; titanium; calcined carbon; copper; stainless steel surface-treated with carbon, nickel, titanium, or silver; an aluminum-cadmium alloy; a non-conductive polymer surface-treated with a conductive agent; a conductive polymer; paste including powder such as Ni, Al, Au, Ag, Pd-Ag, Cr, Ta, Cu, Ba or indium tin oxide (ITO); or carbon paste including carbon powder such as graphite, carbon black, or carbon nanotube.

The conductive polymer may be any one selected from the group consisting of polyacetylene, polyaniline, polypyrrole, polythiophene, and polymeric sulfur nitride or a mixture of two or more thereof.

When each of the first inner electrode and the outer electrode is a negative electrode and the second inner electrode is a positive electrode, each of the first inner active material and the outer active material may include any one active material particle selected from the group consisting of natural graphite, artificial graphite, or a carbonaceous material; a lithiumcontaining titanium composite oxide (LTO); a metal (Me), such as Si, Sn, Li, Zn, Mg, Cd, Ce, Ni, or Fe; an alloy including the metal (Me); an oxide of the metal (Me) (MeOx); and a complex of the metal (Me) and carbon or a mixture of two or more thereof. When the second inner electrode is a positive electrode, the same may be applied as when each of the first inner electrode and the outer electrode is a positive electrode, as described below.

When each of the first inner electrode and the outer electrode is a positive electrode and the second inner electrode is a negative electrode, each of the first inner active material and the outer active material may include any one active material particle selected from the group consisting of LiCoO₂, LiNiO₂, LiMn₂O₄, LiCoPO₄, LiFePO₄, and LiNi_{1-x-y-z}CoₓM1_{y}M2_{z}O₂ (each of M1 and M2 is any one selected from the group consisting of Al, Ni, Co, Fe, Mn, V, Cr, Ti, W, Ta, Mg, and Mo, and x, y, and z are atomic fractions of oxide composition elements which are independent of each other, wherein 0≤x<0.5, 0≤y<0.5, 0≤z<0.5, and 0<x+y+z≤ 1) or a mixture of two or more thereof. When the second inner electrode is a negative electrode, the same may be applied as when each of the first inner electrode and the outer electrode is a negative electrode, as described above.

The inner electrode includes a first inner electrode including a first inner current collector and a first inner active material layer formed on one surface of the first inner current collector. The inner electrode may include an inner separation layer spirally wound outside the first inner electrode and a second inner electrode spirally wound outside the inner separation layer.

The second inner electrode may include a second inner current collector and a 2-1 inner active material layer and a 2-2 inner active material layer formed respectively on both surfaces of the second inner current collector.

The first inner electrode, the inner separation layer, the second inner electrode, the outer separation layer, and the outer electrode may sequentially enclose the outer surface of the cable-type electrode assembly, and each of the first inner electrode, the inner separation layer, the second inner electrode, the outer separation layer, and the outer electrode may have a strip structure spirally wound and extending in one direction.

Alternatively, each of the first inner electrode, the second inner electrode, and the outer electrode may have a metal wire structure having an outer surface coated with an active material layer.

The metal wire structure may be in the form of a thin wire made of a metal material with an active material layer coated on the surface thereof, wherein the first inner electrode, the second inner electrode, and the outer electrode, each having the metal wire structure coated with the active material layer, may be spirally wound so as to be spaced apart from each other or in tight contact with each other without being spaced apart from each other

The first inner electrode, the inner separation layer, the second inner electrode, the outer separation layer, and the outer electrode may be spirally wound so as not to overlap each other. The same applies to a monocell including an inner electrode, an outer separation layer, and an outer electrode.

The first inner electrode, the inner separation layer, the second inner electrode, the outer separation layer, and the outer electrode may be spirally wound so as to be spaced apart from each other by a distance no more than twice the width of each thereof such that the first inner electrode, the inner separation layer, the second inner electrode, the outer separation layer, and the outer electrode do not overlap each other. The same applies to a monocell including an inner electrode, an outer separation layer, and an outer electrode.

The first inner electrode, the inner separation layer, the second inner electrode, the outer separation layer, the outer electrode, and the embedded member may be spirally wound so as to overlap each other. The same applies to a monocell including an inner electrode, an outer separation layer, and an outer electrode.

The first inner electrode, the inner separation layer, the second inner electrode, the outer separation layer, the outer electrode, and the embedded member may be spirally wound such that the width of an overlapping portion is within 0.9 times the width of each thereof. The same applies to a monocell including an inner electrode, an outer separation layer, and an outer electrode.

Each of the inner separation layer and the outer separation layer may be an electrolyte layer or a separator.

The separator may have a porous polymer substrate made of a polyolefin-based polymer selected from the group consisting of an ethylene homopolymer, a propylene homopolymer, an ethylene-butene copolymer, an ethylenehexene copolymer, and an ethylene-methacrylate copolymer; a porous polymer substrate made of a polymer selected from the group consisting of polyester, polyacetal, polyamide, polycarbonate, polyimide, polyetheretherketone, polyethersulfone, polyphenylene oxide, polyphenylene sulfide, and polyethylene naphthalate; a porous substrate made of a mixture of inorganic particles and a binder polymer; or a porous coating layer made of a mixture of inorganic particles and a binder polymer and formed on at least one surface of the porous polymer substrate.

The embedded member may be made of a polymer resin.

The polymer resin may include any one selected from the group consisting of polyethylene terephthalate (PET), polyvinyl chloride (PVC), high density polyethylene (HDPE), and an epoxy resin or two or more thereof.

The embedded member may further include a moisture barrier layer.

The moisture barrier layer may be made of aluminum or a liquid crystal polymer.

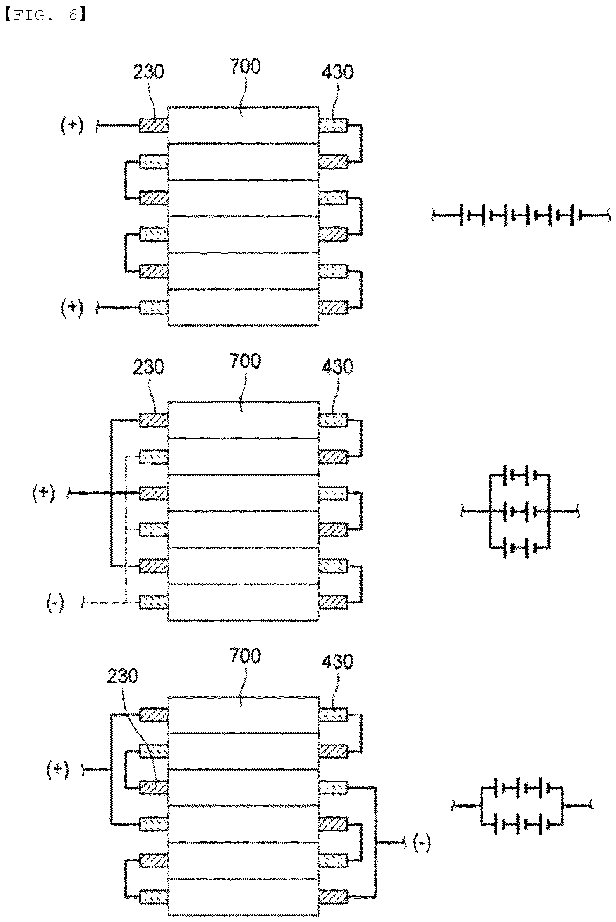

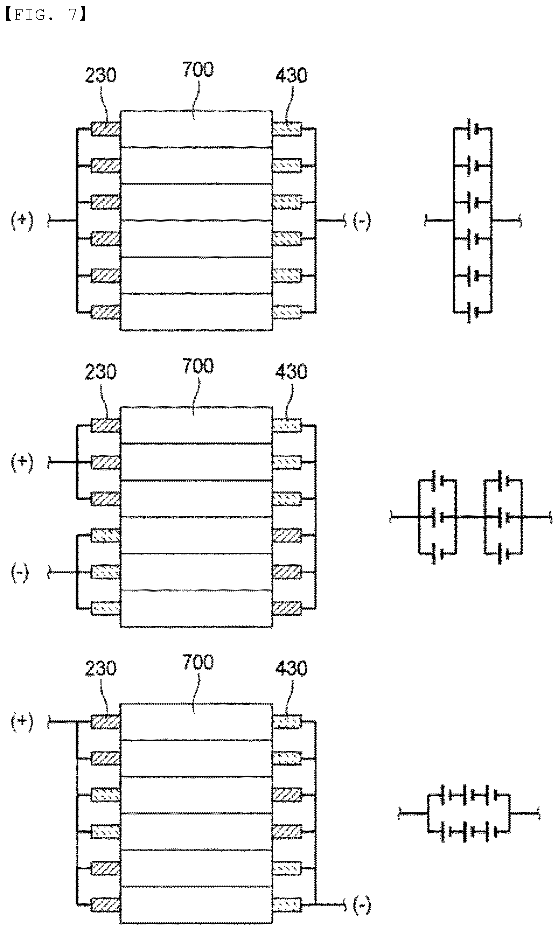

FIG. 6 is a schematic view showing series connection of the one-column cable-type cell assembly according to the embodiment of the present invention, and FIG. 7 is a schematic view showing series and parallel connection of the one-column cable-type cell assembly according to the embodiment of the present invention.

Referring to FIGs. 6 and 7, the cable-type cell assembly is configured such that five cable-type cells received in an embedded member are wrapped by the sheathing member 700 and are connected to each other in series/parallel via the inner electrode tabs 230 and the outer electrode tabs 430.

In order to prevent separation between the cable-type cells, however, fixing members configured to physically fix both ends of the cable-type cells may be further formed at both ends of the sheathing member 700.

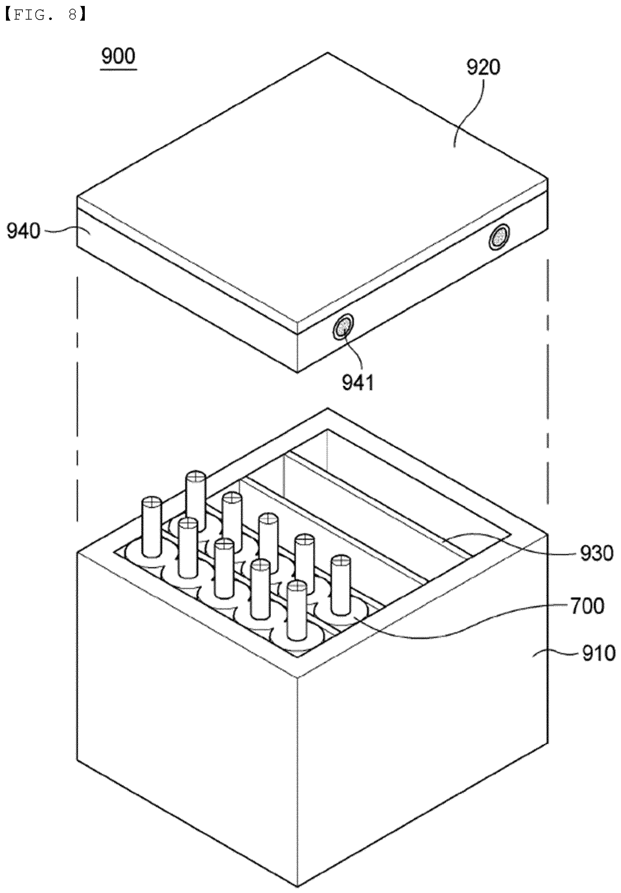

FIG. 8 is a schematic view of a cable-type battery module in which the one-column cable-type cell assembly according to the embodiment of the present invention is loaded.

Referring to FIG. 8, the cable-type battery module 900 includes a module case 910 having a thermally conductive heat dissipation member 930 provided therein, wherein a cable-type cell assembly including two or more cable-type cells having a sheathing member 700 added thereto is received in the module case 910.

At least one cable-type cell assembly may be received in a space partitioned by the heat dissipation member 930.

The cable-type battery module 900 may include a module cover 920 coupled to the module case 910, the module cover being configured to seal the cable-type cell assembly.

The cable-type battery module 900 may include a terminal assembly 940 for electrical connection between the cable-type cell assembly and an external terminal.

The terminal assembly 940 may include a terminal assembly body fixedly coupled to the module case 910 so as to be connected to an electrode terminal of the cable-type cell assembly and an input and output terminal 941 protruding from one side of the terminal assembly body so as to be electrically connected to the cable-type cell assembly.

The electrode tabs of the cable-type cell may be formed in one direction or both directions.

The cable-type cell assembly may be used in one or more of a smartphone, a VR device, an AR device, a wearable device, or other small devices.

A cable-type battery pack according to the present invention may be a cable-type battery pack including at least one cable-type battery module, wherein the cable-type battery pack is used as a power source for medium to large devices.

Each of the medium to large devices may be a power tool; an electric vehicle, including an electric vehicle (EV), a hybrid electric vehicle (HEV), and a plug-in hybrid electric vehicle (PHEV); an electric two-wheeled vehicle, including an E-bike and an E-scooter; an electric golf cart; an electric truck; an electric commercial vehicle; or an energy storage system.

### (Comparative Example 1)

Both ends of a pouch-type cell assembly including five conventional pouch-type cells connected to each other by terminal connection were fixed, and external force was applied to the center of the pouch-type cell assembly to measure stress due to a change in strain.

### (Example 1)

Both ends of a cable-type cell assembly including five cable-type monocells according to the present invention connected to each other by terminal connection were fixed, and external force was applied to the center of the cable-type cell assembly to measure stress due to a change in strain.

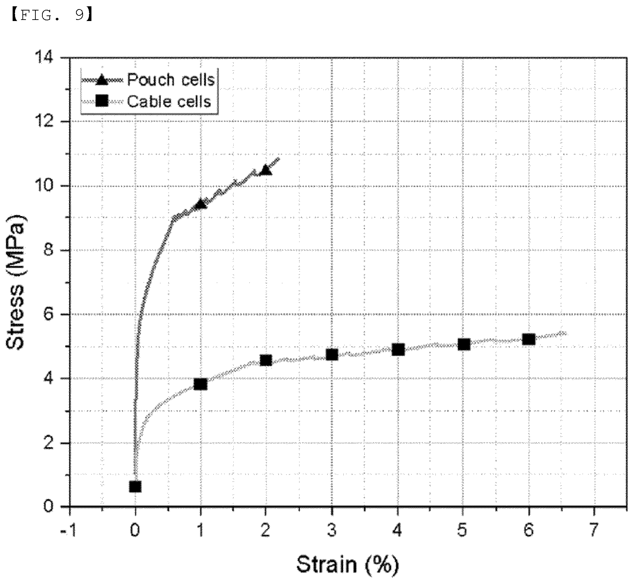

FIG. 9 is a stress-strain graph of the conventional pouch-type cell assembly and the one-column cable-type cell assembly according to the embodiment of the present invention.

Referring to FIG. 9, for the pouch-type cell assembly of Comparative Example 1, a stress value of 10 MPa or more was measured for a low strain change of 2%.

For the cable-type cell assembly of Example 1, a stress value of 6 MPa or less was measured for a high strain change of 6% or more.

Consequently, it can be seen that the cable-type cell assembly has high flexibility with respect to high external force applied to the cell assembly with terminal connection.

### (Comparative Example 2)

Both ends of a pouch-type cell assembly including five conventional pouch-type cells connected to each other by terminal connection were fixed, and external force was repeatedly applied to the center of the pouch-type cell assembly to measure resistance change (R/R₀) of the assembly due to increase in bending cycle.

### (Example 2)

Both ends of a cable-type cell assembly including five cable-type monocells according to the present invention connected to each other by terminal connection were fixed, and external force was repeatedly applied to the center of the cable-type cell assembly to measure resistance change (R/R₀) of the assembly due to increase in bending cycle.

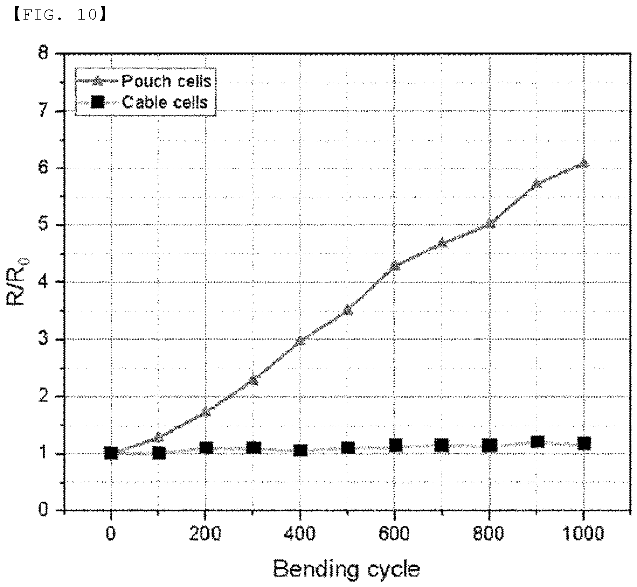

FIG. 10 is a graph showing resistance change (R/R₀) due to increase in bending cycle in the conventional pouch-type cell assembly and the one-column cable-type cell assembly according to the embodiment of the present invention.

Referring to FIG. 10, it can be seen that, for the pouch-type cell assembly of Comparative Example 1, the resistance change increases in the form of a linear first order function as the number of bending cycles increases.

It can be seen that, for the cable-type cell assembly of Example 2, there is almost no change in resistance up to 1000 bending cycles.

Those skilled in the art to which the present invention pertains will appreciate that various applications and modifications are possible within the category of the present invention based on the above description.

### (Description of Reference Symbols)

A: Positive electrode lead
B: Negative electrode lead
C: Terminal wire
D: Pouch-type cell
100: Inner electrode support
200: Inner electrode
210: First inner current collector
220: First inner active material layer
230: Inner electrode tab
300: Outer separation layer
400: Outer electrode
410: Outer current collector
420: Outer active material layer
430: Outer electrode tab
440: Polymer support layer
500: Cable-type electrode assembly
600: Embedded member
700: Sheathing member
710: Cell receiving portion
720: Cell connection portion
800: Cable-type cell
900: Cable-type battery module
910: Module case
920: Module cover
930: Heat dissipation member
940: Terminal assembly
941: Input and output terminal

## Claims

1. A cable-type cell assembly comprising:
two or more cable-type cells, each of the two or more cable-type cells comprising:
a cable-type electrode assembly having a structure that includes an inner electrode support, one or more inner electrodes spirally wound on the inner electrode support in sequence, an outer separation layer, and an outer electrode;
a laminated embedded member configured to receive the cable-type electrode assembly;
an electrode tab formed outside the laminated embedded member and configured for electrical connection of the cable-type electrode assembly; and
a sheathing member formed outside the laminated embedded member, the sheathing member being configured to physically connect the two or more cable-type cells to each other.

2. The cable-type cell assembly according to claim 1, wherein the plurality of cable-type cells is connected to each other in parallel and/or in series via the electrode tab.

3. The cable-type cell assembly according to claim 2, wherein the sheathing member connects n cable-type cells (n being an integer greater than zero) to each other in one column.

4. The cable-type cell assembly according to claim 1, wherein the sheathing member is in contact with an outside of the laminated embedded member.

5. The cable-type cell assembly according to claim 4, wherein the sheathing member is made of any one selected from a group consisting of a polymer compound, a metal, and a ceramic or two or more thereof.

6. The cable-type cell assembly according to claim 5, wherein the polymer compound of the sheathing member comprises any one selected from a group consisting of polyethylene terephthalate (PET), polyvinyl chloride (PVC), high density polyethylene (HDPE), and an epoxy resin or a mixture of two or more thereof.

7. The cable-type cell assembly according to claim 5, wherein the sheathing member is made of a heat shrinkable polymer compound.

8. The cable-type cell assembly according to claim 7, wherein the heat shrinkable polymer compound comprises any one selected from a group consisting of polyolefin, polyester, a fluoro-resin, and polyvinyl chloride or two or more thereof.

9. The cable-type cell assembly according to claim 5, wherein the metal comprises any one of iron, carbon, chromium, manganese, stainless steel, aluminum, nickel, titanium, calcined carbon, and copper or an alloy of two or more thereof.

10. The cable-type cell assembly according to claim 5, wherein the ceramic comprises any one of clay, kaolinite, aluminum oxide (Al₂O₃), silicon carbide (SiC), tungsten carbide, silicon, and carbon or a ceramic mixture of two or more thereof.

11. The cable-type cell assembly according to claim 5, wherein an adhesive layer that is configured for adhesion with an outer surface of the laminated embedded member is further formed on an inner surface of the sheathing member.

12. The cable-type cell assembly according to claim 11, wherein the adhesive layer is made of any one of polypropylene, polycarbonate, polyethylene, styrene butadiene rubber, sodium carboxymethylcellulose, polyvinylidene fluoride, polyvinylidene fluoride copolymer, polytetrafluoroethylene, polystyrene, polyacrylonitrile, polyimide, polyacrylic acid, sodium polyacrylate, polyvinyl alcohol, sodium alginate, poly(methacrylic acid), and carboxymethyl chitosan or two or more thereof.

13. The cable-type cell assembly according to claim 1, wherein a section of the cable-type cell has any one of a circular shape, an oval shape, a triangular shape, a quadrangular shape, a square shape, a rectangular shape, a polygonal shape, and an amorphous shape.

14. The cable-type cell assembly according to claim 3, wherein a sectional shape of the cable-type cell assembly is at least one of a horizontal straight shape, a vertical straight shape, a W shape, an S shape, a Z shape, a U shape, and an O shape.

15. The cable-type cell assembly according to claim 1, wherein the sheathing member comprises a cell receiving portion configured to receive the cable-type cell and a cell connection portion configured to connect adjacent cell receiving portions to each other.

16. The cable-type cell assembly according to claim 15, wherein the cell connection portion has a predetermined length in order to form a gap between adjacent cable-type cells.

17. The cable-type cell assembly according to claim 15, wherein a length of the cell connection portion is 5% to 500% of a sectional length of the cable-type cell.

18. The cable-type cell assembly according to claim 15, wherein the cell receiving portion is:
in a form of a tube that is open such that a section of each end of the cell receiving portion corresponds to a sectional shape of the cable-type cell received therein; or
in a form of a tube in which an opening is formed in the tube such that only the electrode tab protrudes outward.

19. The cable-type cell assembly according to claim 16, wherein:
the cell connection portion is configured to connect facing sides of adjacent cell receiving portions to each other, and
a thickness of the cell connection portion is equal to or greater than a thickness of the cell receiving portion.

20. The cable-type cell assembly according to claim 1, wherein the laminated embedded member is spirally wound or is pocket-shaped to receive the cable-type electrode assembly.

21. The cable-type cell assembly according to claim 1, wherein the inner electrode is a monocell type first inner electrode comprising a first inner current collector and a first inner active material layer formed on one surface of the first inner current collector.

22. The cable-type cell assembly according to claim 21, wherein the inner electrode is a bi-cell type inner electrode comprising an inner separation layer spirally wound outside the first inner electrode and a second inner electrode spirally wound outside the inner separation layer.

23. The cable-type cell assembly according to claim 22, wherein the second inner electrode comprises a second inner current collector and a 2-1 inner active material layer and a 2-2 inner active material layer formed respectively on opposite surfaces of the second inner current collector.

24. The cable-type cell assembly according to claim 23, wherein:
the first inner electrode, the inner separation layer, the second inner electrode, the outer separation layer, and the outer electrode sequentially enclose an outer surface of the cable-type electrode assembly; and
each of the first inner electrode, the inner separation layer, the second inner electrode, the outer separation layer, and the outer electrode has a strip structure spirally wound and extending in one direction or has a metal wire structure spirally wound and having an outer surface coated with an active material layer.

25. The cable-type cell assembly according to claim 22, wherein the first inner electrode, the inner separation layer, the second inner electrode, the outer separation layer, and the outer electrode are spirally wound so as not to overlap each other.

26. The cable-type cell assembly according to claim 22, wherein the first inner electrode, the inner separation layer, the second inner electrode, the outer separation layer, and the outer electrode are spirally wound so as to be spaced apart from each other by a distance no more than twice a width of each thereof such that the first inner electrode, the inner separation layer, the second inner electrode, the outer separation layer, and the outer electrode do not overlap each other.

27. The cable-type cell assembly according to claim 24, wherein the first inner electrode, the inner separation layer, the second inner electrode, the outer separation layer, the outer electrode, and the embedded member are spirally wound so as to overlap each other.

28. The cable-type cell assembly according to claim 24, wherein the first inner electrode, the inner separation layer, the second inner electrode, the outer separation layer, the outer electrode, and the embedded member are spirally wound such that a width of an overlapping portion is within 0.9 times the width of each thereof.

29. A cable-type battery module comprising the cable-type cell assembly according to any one of claims 1 to 28, wherein the cable-type battery module comprises a module case configured to receive the cable-type cell assembly, the module case having a thermally conductive heat dissipation member provided therein.

30. The cable-type battery module according to claim 29, wherein the cable-type cell assembly is received in a space partitioned by the heat dissipation member in one or more.

31. The cable-type battery module according to claim 29, comprising a terminal assembly configured for electrical connection between the cable-type cell assembly and an external terminal.

32. The cable-type battery module according to claim 29, wherein the terminal assembly comprises a terminal assembly body fixedly coupled to the module case so as to be connected to an electrode tab of the cable-type cell assembly and an input and output terminal protruding from one side of the terminal assembly body so as to be electrically connected to the cable-type cell assembly.

33. The cable-type battery module according to claim 29, wherein the electrode tabs of the cable-type cell are formed in one direction or both directions.

34. The cable-type battery module comprising the cable-type cell assembly according to any one of claims 1 to 28, wherein the cable-type cell assembly is configured to be used in one or more of a smartphone, a VR device, an AR device, a wearable device, or other small devices.

35. A cable-type battery pack comprising at least one cable-type battery module according to claim 29, wherein the cable-type battery pack is configured to be used as a power source for medium to large devices.

36. The cable-type battery pack according to claim 35, wherein each of the medium to large devices is a power tool; an electric vehicle, including an electric vehicle (EV), a hybrid electric vehicle (HEV), and a plug-in hybrid electric vehicle (PHEV); an electric two-wheeled vehicle, including an E-bike and an E-scooter; an electric golf cart; an electric truck; an electric commercial vehicle; or an energy storage system.
